# EUROPEAN PATENT APPLICATION

(11) **EP 1 187 039 A2**
(43) Date of publication of application: **13.03.2002**
(21) Application number: 01304822.8
(22) Date of filing: 31.05.2001
(51) Int. Cl.: G06F 17/30, G06F 17/24

(54) **Method of aiding portal site making and method of providing services**

(30) Priority: 07.09.2000 JP 2000271936
(71) Applicant: Hitachi Ltd., Tokyo (JP)
(72) Inventor: Watanabe, Naoki, Hitachi, Ltd., Intellectual Prop, Chiyodaku, Tokyo 100-8220 (JP); Kamada, Eiichi, Hitachi, Ltd., Intellectual Prop, Chiyodaku, Tokyo 100-8220 (JP); Kikuta, Atsushi, Hitachi, Ltd., Intellectual Prop, Chiyodaku, Tokyo 100-8220 (JP); Ikawa, Yuji, Hitachi, Ltd., Intellectual Prop, Chiyodaku, Tokyo 100-8220 (JP)
(74) Representative: Calderbank, Thomas Roger

(57) **Abstract**

In a method of aiding portal site making, a plurality of mount files (707) are prepared, one of the plurality of mount files is displayed in accordance with selection by a user, a plurality of image/information files (307) indicative of various services are prepared, and the image/information files are mounted on the displayed mount file in accordance with operation by the user. Each of the image/information files is made by embedding information indicative of the contents of the various services in images for identifying the various services through digital watermarking.

## Description

The present invention relates to service providing systems for providing services on a network and more particularly, to a method of aiding portal site making and a method of providing services.

Conventionally, the provision of various services such as display of timetables of transport facilities and inquiries about unoccupied room conditions of lodging accommodations has been made through Internet. For accessing sites that provide various services, there is available a method of accessing various portal sites of, for example, a site that provides information search services and utilizing URL's (Uniform Resource Locators) provided at the site.

In the portal site as above, in addition to the provision of URL information through information search services, link information is added at images displayed on its page to permit access to sites that provide various services. In other words, the correspondence between an image indicative of an outline of a specified service and a URL to a site for providing that service is made and when a user clicks the image in question, movement to the URL corresponding to that image is done, so that the user can receive the provision of the service at the URL.

JP-A-11-259486 describes reading homepage making method and apparatus in which a homepage for reading or inspection specific to a user is made and registered on the provider side to permit the user to derive specified information from many URL's even when the user is present at any places. Its outline is as follows. When a server of an Internet provider receives a request for making of a reading homepage from a client, it references or consults a search database connected to a machine of its own or references a search database of a search service company by utilizing a search engine so as to make a URL list of homepages providing information corresponding to a reading item requested by the client, and makes and registers a reading homepage in which individual URL's listed up in the URL list are hyperlinked to the corresponding homepages. Thereafter, the client accesses the registered reading homepage and opens various pages by utilizing the URL list registered in that reading homepage, thus obtaining the necessary information.

In the conventional service providing system as above, to receive the provision of a service, a single URL making the correspondence with a certain image is accessed and consequently, services to be provided become standardized, thus raising a problem that service provided through the image is limited to the services at the specified URL.

In the conventional service providing system as above, for the provision of a plurality of different services at a single site, a plurality of images corresponding to individual services are needed, so that the user must examine which one of the plurality of images is an image corresponding to a service to be provided and thereafter click the image, raising a problem that usability is degraded.

An object of the present invention is to solve the above problems and to provide a technique for enabling a user or its agency to efficiently make a portal site necessary for receiving the provision of various services.

Another object of the invention is to provide a technique capable of changing a service that can be provided to the user or its agency in accordance with the type of a mount file.

According to the present invention, in a method of aiding portal site making, a plurality of mount files are prepared, one of the plurality of mount files is displayed in accordance with selection by a user, a plurality of image/information files indicative of various services are prepared, and the image/information files are mounted to the displayed mount file in accordance with operation by the user. Each of the image/information files is made by embedding information indicative of the contents of various services in images identifying the various services through digital watermarking.

According to the invention, in a service providing method of providing services on a network, a portal site having a mount to which image/information files indicative of various services are mounted is displayed and a service item is provided in accordance with selection of the image/information files by a user.

### IN THE DRAWINGS:

Fig. 1 is a diagram showing a schematic construction of a service providing system according to an embodiment of the invention.

Fig. 2 is a diagram showing an outline of process in the service providing system in the present embodiment.

Fig. 3 is a diagram showing a schematic construction of an image/information file making server 100 in the present embodiment.

Fig. 4 shows an example of data structure of an image/information file 307 in the present embodiment.

Fig. 5 is a diagram showing an outline of an image/information file making process in the present embodiment.

Fig. 6 is a diagram showing a schematic construction of an image/information file providing server 101 in the present embodiment.

Fig. 7 is a diagram showing a schematic construction of a mount file providing server 102 in the present embodiment.

Fig. 8 is a diagram showing a schematic construction of a service providing server 103 in the present embodiment.

Fig. 9 is a diagram showing a schematic construction of a user side PC 104 in the present embodiment.

Fig. 10 is a flowchart showing the procedure of a portal site making process in the present embodiment.

Fig. 11 is a diagram showing an example of making a business-trip portal site in the present embodiment.

Fig. 12 is a diagram showing an example of making a housewife portal site in the present embodiment.

Fig. 13 is a flowchart showing the procedure of a service providing process in the present embodiment.

Fig. 14 is a diagram showing examples of service menu displays for individual mount types in the present embodiment.

### (1) Construction of System

A service providing system according to an embodiment of the invention will now be described which provides services by using an image/information file that combines images with information.

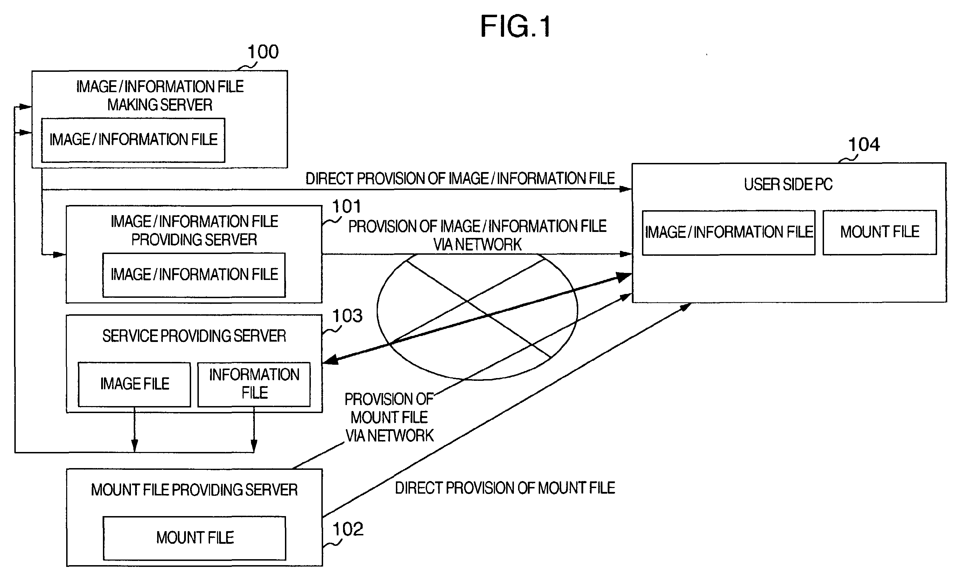

Fig. 1 is a diagram showing a schematic construction of the service providing system according to the present embodiment. As shown in Fig. 1, the service providing system of the present embodiment comprises an image/information file making server 100, an image/information providing server 101, a mount file providing server 102, a service providing server 103 and a user side PC (personal computer) 104.

The image/information file making server 100 is an information processor for making an image/information file having image and information in combination. The image/information providing server 101 is an information processor for providing the image/information file made by the image/information file making server 100 to the user side PC 104.

The mount file providing server 102 is an information processor for providing a mount file, to which the image/information file made by the image/information file making server 100 is mounted, to the user side PC 104. The service providing server 103 is an information processor for receiving a request for provision of a service corresponding to information stored in the image/information file from the user side PC 104 and providing the service thereto.

The user side PC 104 is an information processor for mounting the image/information file made by the image/information file making server 100 to the mount file provided from the mount file providing server to generate a file corresponding to a portal site for each user and receiving the provision of services from the service providing server 103 in accordance with information in the image/information file mounted to the mount file.

The servers 100, 101, 102 and 103 and the user side PC are connected to a network such as Internet.

In Fig. 1, the image/information file making server 100, image/information file providing server 101, mount file providing server 102 and service providing server 103 are depicted as being separate apparatus but they may be implemented with a single or a plurality of apparatus. Alternatively, each of the servers may be plural in number.

### (2) Provision Form of Services

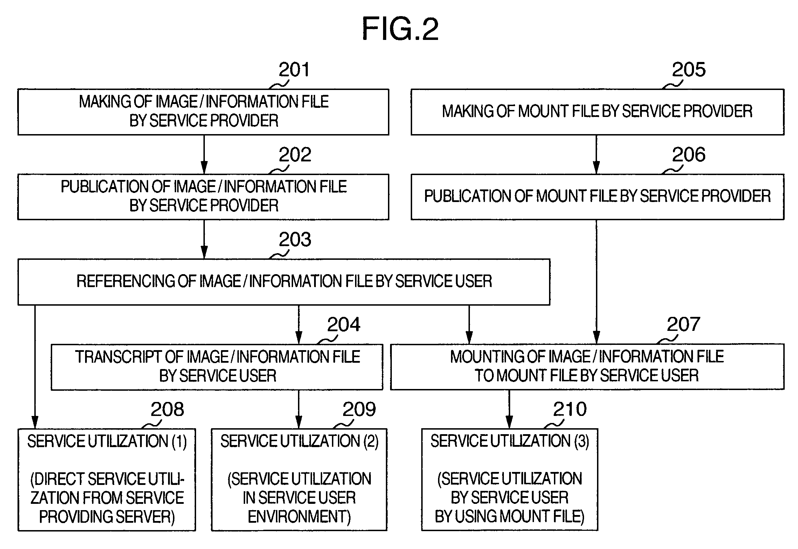

Fig. 2 is a diagram showing an outline of process in the service providing system of the present embodiment. Firstly, a service provider or its agency makes (201) an image/information file with the image/information file making server 100 and publicizes (202) the image/information file with the image/information file providing server 101.

A service user or its agency intending to receive the provision of a service utilizes (208) the service directly from the service providing server 103 by referencing (203) the image/information file publicized at the image/information file providing server 101 through the user side PC 104. In an alternative, the service user or its agency transcribes (204) the image/information file in the image/information file providing server 101 to the user side PC 104 so as to utilize (209) the service in a service user environment or service user agency environment.

Also, the service provider or its agency makes (205) a mount file and publicizes (206) it with the mount file providing server 102. The service user or service user agency mounts (207) the image/information file acquired from the image/information file providing server 101 to the mount file acquired from the mount file providing server 102 and utilizes (210) the service by using the image/information file mounted to the mount file.

### (3) Making and Provision of Image/Information File

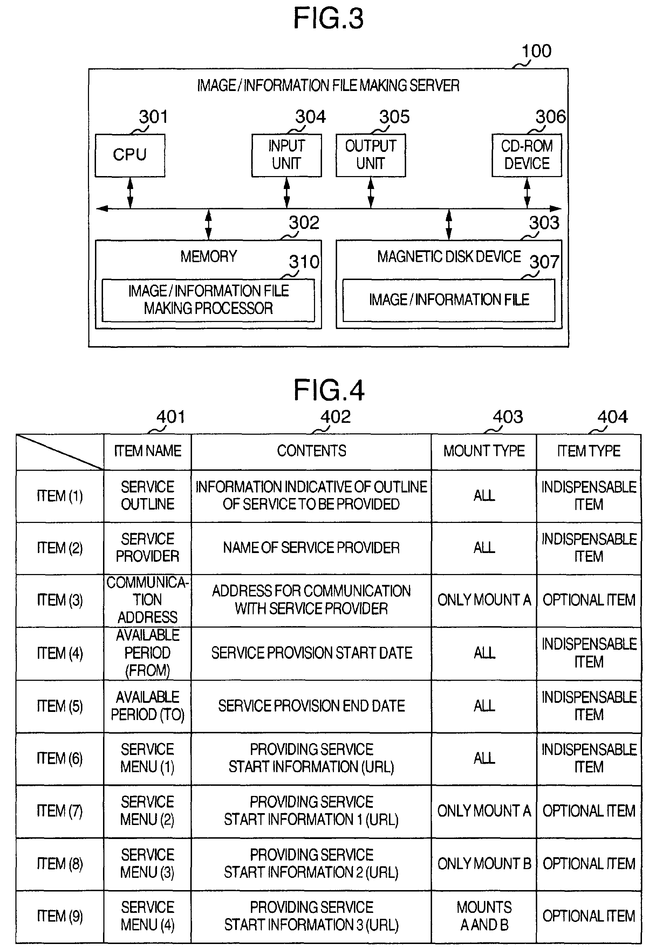

Fig. 3 is a diagram showing a schematic construction of the image/information file making server 100 in the present embodiment. As shown in Fig. 3, the image/information file making server 100 in the present embodiment includes a CPU 301, a memory 302, a magnetic disk device 303, an input unit 304, an output unit 305, a CD-ROM device 306 and an image/information file 307.

The CPU 301 is a unit for controlling operation of the whole of the image/information file making server 100. The memory 302 is a storage device for loading various process programs and data necessary to control operation of the whole of the image/information file making server 100.

The magnetic disk device 303 is a storage device for storing the aforementioned various process programs and data such as images and information necessary to make the image/information file 307. The input unit 304 is a unit for inputting various inputs necessary to make the image/information file 307.

The output unit 305 is a unit for delivering various outputs that accompany making of the image/information file 307. The CD-ROM device 306 is a device for reading the contents of a CD-ROM recording the aforementioned various process programs. The image/information file 307 is a file having an image for identifying a service provided from the service providing server 103 and information indicative of the contents of that service in combination (detailed later).

The image/information file making server 100 also includes an image/information file making processor 310. The image/information file making processor 310 is a processor for receiving the image for identifying the service provided from the service providing server 103 and the information indicative of the contents of that service as an image file and an information file, respectively, and synthesizes the image data and the information data to make the image/information file 307.

Assumptively, a program necessary for causing the image/information file making server 100 to function as the image/information file making processor 310 is recorded on a recording medium such as the CD-ROM and stored in, for example, the magnetic disk and thereafter loaded on the memory so as to be executed. The recording medium for recording the aforementioned program may be a recording medium other than the CD-ROM.

Fig. 4 shows an example of data structure of information data to be embedded in one sheet of image data of the image/information file 307 in the present embodiment.

The information data has item name 401, content 402, mount type 403 and item type 404.

The item name 401 indicates data showing names of items concerning services provided from the service providing server 103. The content 402 indicates data showing information corresponding to the item name 401. The content 402 may contain URLs representing link information to the service providing server and program.

The mount type 403 indicates data showing the type of a mount file that displays the item name 401 as a service menu when a predetermined process such as right click is applied to the image/information file 307. In storing the data in the image/information file 307, the item type 404 indicates data showing whether the items of the data are indispensable or not.

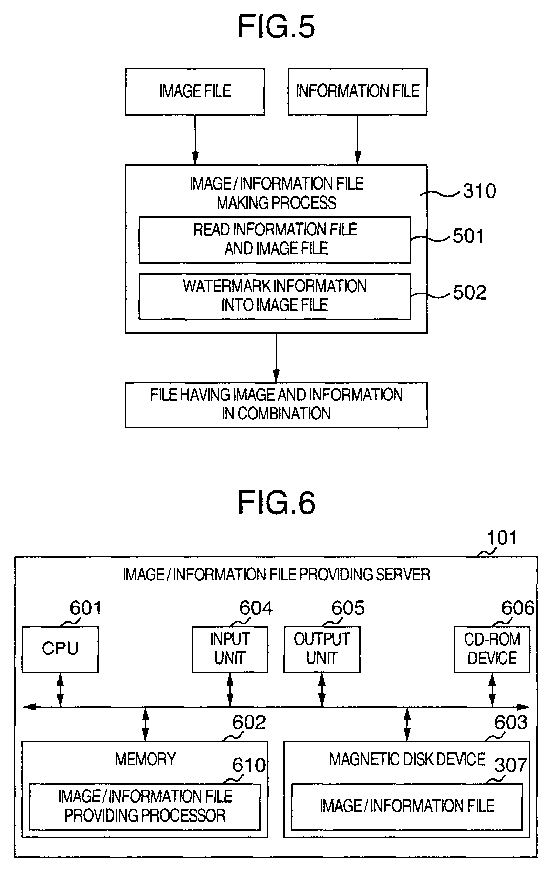

Fig. 5 is a diagram showing an outline of an image/information file making process in the present embodiment. As shown in Fig. 5, the image/information file making processor 310 of the image/information file making server 100 in the present embodiment reads (501) an image for identifying a service provided from the service providing server 103 and information indicative of the content of that service as an image file and an information file, respectively. The image has a format of, for example, JPEG (Joint Photographic Experts Group) or PNG (Portable Network Graphics). The information has the structure shown in Fig. 4. The image/information file making processor 310 carries out a process of making an image/information file 307 by watermarking (502) the read information into the image file as a digital watermark. Various methods for digital watermarking have been known. In case the image is of the PNG format, information is embedded in unoccupied fields where image information is absent. If not all the information can be embedded, an item having arbitrary item in item type 404 is dropped to permit only items having indispensable item in item type 404 to be embedded.

In a modified example, the image/information file making processor 310 may include a function of making an image file by compressing an original image and/or an interface for making an information file interactively with a service provider.

Fig. 6 is a diagram showing a schematic construction of the image/information file providing server 101 in the present embodiment. As shown in Fig. 6, the image/information file providing server 101 in the present embodiment includes a CPU 601, a memory 602, a magnetic disk device 603, an input unit 604, an output unit 605 and a CD-ROM device 606.

The CPU 601 is a unit for controlling operation of the whole of the image/information file providing server 101. The memory 602 is a storage device for loading various process programs and data necessary to control operation of the whole of the image/information file providing sever 101.

The magnetic disk device 603 is a storage device for storing the aforementioned various process programs and the image/information file 307 to be provided. The input unit 604 is a unit for inputting various inputs necessary to provide the image/information file 307. The output unit 605 is a unit for delivering various outputs concomitant with the provision of the image/information file 307. The CD-ROM device 606 is a device for reading the contents of a CD-ROM recording the aforementioned various process programs.

The image/information file providing server 101 also includes an image/information file providing processor 610. The image/information file providing processor 610 is a processor for providing the image/information file 307 made by the image/information file making server 100 to the user side PC 104.

Assumptively, a program for causing the image/information file providing server 101 to function as the image/information file providing processor 610 is recorded on a recording medium such as the CD-ROM and stored in, for example, the magnetic disk and thereafter loaded on the memory so as to be executed. The recording medium for recording the aforementioned program may be one other than the CD-ROM.

### (4) Making and Provision of Mount File

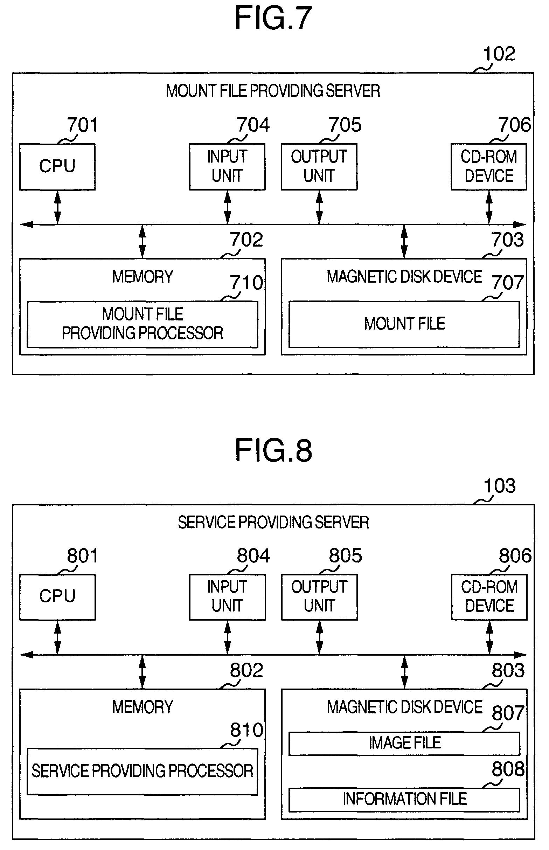

Fig. 7 is a diagram showing a schematic construction of the mount file providing server 102 in the present embodiment. As shown in Fig. 7, the mount file providing server 102 in the present embodiment includes a CPU 701, a memory 702, a magnetic disk device 703, an input unit 704, an output unit 705, a CD-ROM device 706 and a mount file 707.

The CPU 701 is a unit for controlling operation of the whole of the mount file providing server 102. The memory 702 is a storage device for loading various process programs and data necessary to control operation of the whole of the mount file providing server 102.

The magnetic disk device 703 is a storage device for storing the aforementioned various process programs and the mount file 707 to be provided. The input unit 704 is a unit for inputting various inputs necessary to provide the mount file 707. The output unit 705 is a unit for delivering various outputs concomitant with the provision of the mount file 707.

The CD-ROM device 706 is a device for reading the content of a CD-ROM recording the aforementioned various process programs. The mount file 707 is a file to which the image/information file 307 is mounted and is adapted to display, on a homepage, an image such as a map suitable to be mounted with the image/information file 307.

The mount file providing server 102 also includes a mount file providing processor 710. The mount file providing processor 710 is a processor for providing the mount file 707 to the user side PC 104.

Assumptively, a program for causing the mount file providing server 102 to function as the mount file providing processor 710 is recorded on a recording medium such as the CD-ROM and stored in, for example, the magnetic disk and thereafter loaded on the memory so as to be executed. The recording medium for recording the aforementioned program may be one other than the CD-ROM.

The mount file is a file of HTML (Hyper Text Markup Language) format and it may contain a description based on Java Script. The mount file contains the mount type using a tag and a definition of image information defining a mount. Further, the mount file contains a description of Plug-in for defining software that is started when an operation is selected.

As will be described later, the mount file has the function to change/limit the contents of individual services according to the user. Accordingly, the mount file providing processor 710 may have the function to carry out authentication of a mount request originator and provision of a mount file on the level of proper authentication to an authorized mount request originator.

### (5) Provision of Services

Fig. 8 is a diagram showing a schematic construction of the service providing server 103 in the present embodiment. As shown in Fig. 8, the service providing server 103 in the present embodiment includes a CPU 801, a memory 802, a magnetic disk device 803, an input unit 804, an output unit 805, a CD-ROM device 806, an image file 807 and an information file 808.

The CPU 801 is a unit for controlling operation of the whole of the service providing server 103. The memory 802 is a storage device for loading various process programs and data necessary to control operation of the whole of the service providing server 103.

The magnetic disk device 803 is a storage device for storing the aforementioned various process programs and data such as image and information necessary to provide various services. The input unit 804 is a unit for inputting various inputs necessary to provide services.

The output unit 805 is a unit for delivering various outputs accompanying the provision of services. The CD-ROM device 806 is a device for reading the contents of a CD-ROM recording the aforementioned various process programs. The image file 807 is a file for storing image data necessary to identify a service to be provided. The information file 808 is a file for storing information indicative of the contents of the service to be provided.

The service providing server 103 also includes a service providing processor 810. The service providing processor 810 is a processor that receives a request for provision of a service from the user side PC 104 and provides that service thereto.

A program for causing the service providing server 103 to function as the service providing processor 810 is recorded on a recording medium such as the CD-ROM and stored in, for example, the magnetic disk and thereafter loaded on the memory so as to be executed. The recording medium for recording the program may be one other than the CD-ROM.

### (6) Making of Portal Site

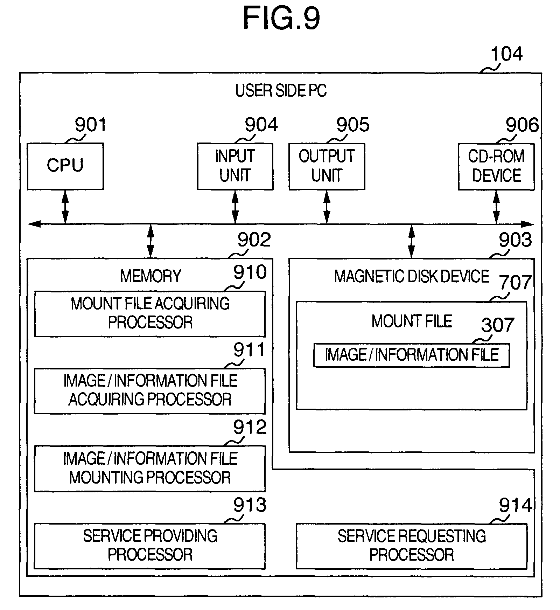

Fig. 9 is a diagram showing a schematic construction of the user side PC 104 in the present embodiment. As shown in Fig. 9, the user side PC 104 in the present embodiment includes a CPU 901, a memory 902, a magnetic disk device 903, an input unit 904, an output unit 905 and a CD-ROM device 906.

The CPU 901 is a unit for controlling operation of the whole of the user side PC 104. The memory 902 is a storage device for loading various process programs and data necessary to control operation of the whole of the user side PC 104.

The magnetic disk device 903 is a storage device for storing the aforementioned various process programs and data such as the mount file 707 mounted with the image/information file 307. The input unit 904 is a unit for inputting various inputs necessary to receive the provision of various services. The output unit 905 is a unit for delivering various outputs accompanying the provision of various services. The CD-ROM device 906 is a device for reading the contents of a CD-ROM recording the aforementioned various process programs.

The user side CP 104 also includes a mount file acquiring processor 910, an image/information file acquiring processor 911, an image/information file mounting processor 912, a service providing processor 913 and a service requesting processor 914.

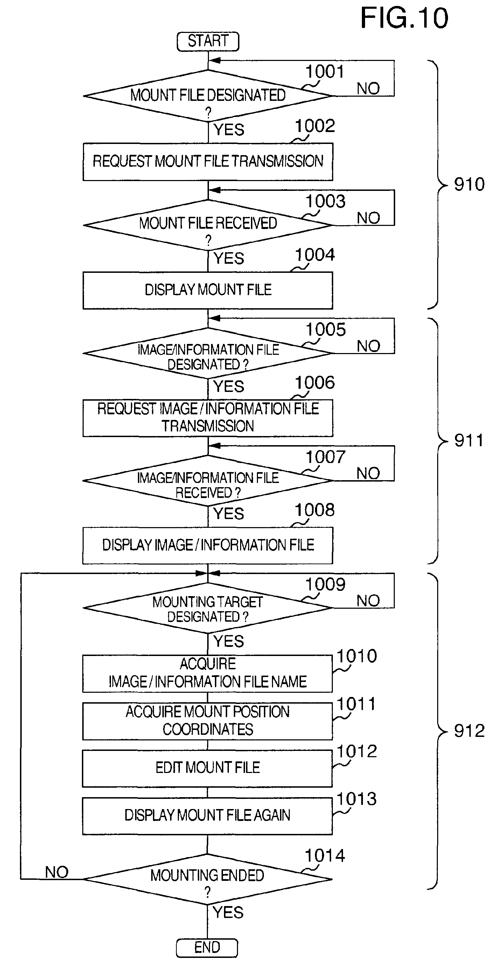

Fig. 10 is a flowchart showing the procedure of portal site making.

As shown in Fig. 10, the mount file acquiring processor 910 of user side PC 104 examines in step 1001 whether designation of a mount file 707 to be acquired from the mount file providing server 102 is made by a user or its agency and when the mount file 707 is designated, the processor 910 acknowledges the receipt of the contents of the designation and proceeds to step 1002.

In the step 1002, the mount file acquiring processor 910 requests the mount file providing server 102 to transmit the acknowledged mount file 707. When receiving a request for transmission of the mount file 707 from the user side PC 104, the mount file providing processor 710 of mount file providing server 102 transmits the requested mount file 707 to the user side PC 104.

In step 1003, the mount file acquiring processor 910 of user side PC 104 examines whether the mount file 707 is received from the mount file providing server 102. If the mount file 707 has been received, the processor 910 proceeds to step 1004.

In the step 1004, the mount file acquiring processor 910 delivers to the output unit 905 a window necessary to display the mount file 707 received from the mount file providing server 102 so that the received mount file 707 may subsequently be displayed in the window.

As described above, in the present embodiment, the mount file 707 is received from the mount file providing server 102 in accordance with the designation from the user or its agency but in case the mount is for business use for instance, the mount file 707 may be transmitted in advance from the mount file providing server 102 to the user side PC 104 and the precedently transmitted mount file 707 may be read out of the magnetic disk device 903 so as to be used.

In step 1005, the image/information file acquiring processor 911 of user side PC 104 examines whether designation of an image/information file 307 to be acquired from the image/information file providing server 101 is made by the user or its agency. If the image/information file 307 is designated, the processor 911 acknowledges the receipt of the contents of the designation and proceeds to step 1006.

In the step 1006, the image/information file acquiring processor 911 requests the image/information file providing server 101 to transmit the acknowledged image/information file 307. When receiving a request for transmission of the image/information file 307 from the user side PC 104, the image/information file providing processor 610 of image/information file providing server 101 transmits the requested image/information file 307 to the user side PC 104.

In step 1007, the image/information file acquiring processor 911 of user side PC 104 examines whether the image/information file 307 is received from the image/information file providing server 101. If the image/information file 307 is in receipt, the processor 911 proceeds to step 1008.

In the step 1008, the image/information file acquiring processor 911 delivers to the output unit 905 a window necessary to display the image/information file 307 received from the image/information file providing server 101 so that the received image/information file 307 may subsequently be displayed in the window.

As described above, in the present embodiment, the image/information file 307 is received from the image/information file providing server 101 in accordance with the designation from the user or its agency but in an alternative, an image/information file 307 may be transmitted in advance from the image/information file providing server 101 to the user side PC 104 and the transmitted image/information file 307 may be read out of the magnetic disk device 903 so as to be used.

In step 1009, the image/information file mounting processor 912 of user side PC 104 examines whether designation of the image/information file 307 to be mounted to the mount file 707 acquired from the mount file providing server 102 is carried out by the user or its agency. If the image /information file 307 is designated, the processor 912 acknowledges the receipt of the contents of the designation and proceeds to step 1010. For example, in case a specified image/information file 307 is dragged from the window in which the acquired image/information file 307 is displayed and is then dropped in a window in which the mount file 707 is displayed, it is recognized that the designation of the image/information file 307 to be mounted to the mount file 707 is made by the user or its agency. Then, the processor 912 proceeds to the step 1010.

In the step 1010, the image/information file mounting processor 912 acquires a name of the image/information file 307 designated by the user or its agency. In step 1011, the processor 912 acquires coordinates on mount file 707 indicative of a position at which the image/information file 307 is mounted. For example, in case the designation of the image/information file 307 is carried out by drag and drop, the name of the dragged image/information file 307 is acquired in the step 1010 and the coordinates on mount file 707 at which the image/information file 307 is dropped are acquired in the step 1011.

In step 1012, the image/information file mounting processor 912 edits the mount file 707 to be mounted with the image/information file 307 and adds to a source file of the mount file 707 a description necessary to display the image/information file 307 of the name acquired in the step 1010 at the coordinates on mount file 707 acquired in the step 1011. More specifically, a description based on HTML for defining the display coordinates of image/information file, the image/information file name and the Plug-in software related to image/information file is inserted or added to a description of the mount file by using a tag.

In step 1013, the image/information file mounting processor 912 again displays the edited mount file 707 so as to indicate to the output unit 905 the mount file 707 mounted with the image/information file 307 designated by the user or its agency.

In step 1014, the image/information file mounting processor 912 examines whether it is designated by the user or its agency to end the process for mounting the image/information file 307 to the mount file 707. If designation of the next image/information file 307 is made, the processor 912 returns to the step 1009 but when the designation of the end of the mounting process is made, the processor 912 ends the process. The mount file mounted with the image/information file is stored in the magnetic disk device 903 of the user side PC 104.

In this example, the image/information acquiring processor 911 and image/information file mounting processor 912 may be defined as Plug-in within the mount file and may be executed when a predetermined operation is carried out on the mount file.

By mounting a plurality of image/information files 307 for providing different services to a predetermined mount file 707 in the manner as described above, a mount file 707 corresponding to a personal portal site such as a portal site for business trip or a portal site for housewife can be made easily for each user or its agency.

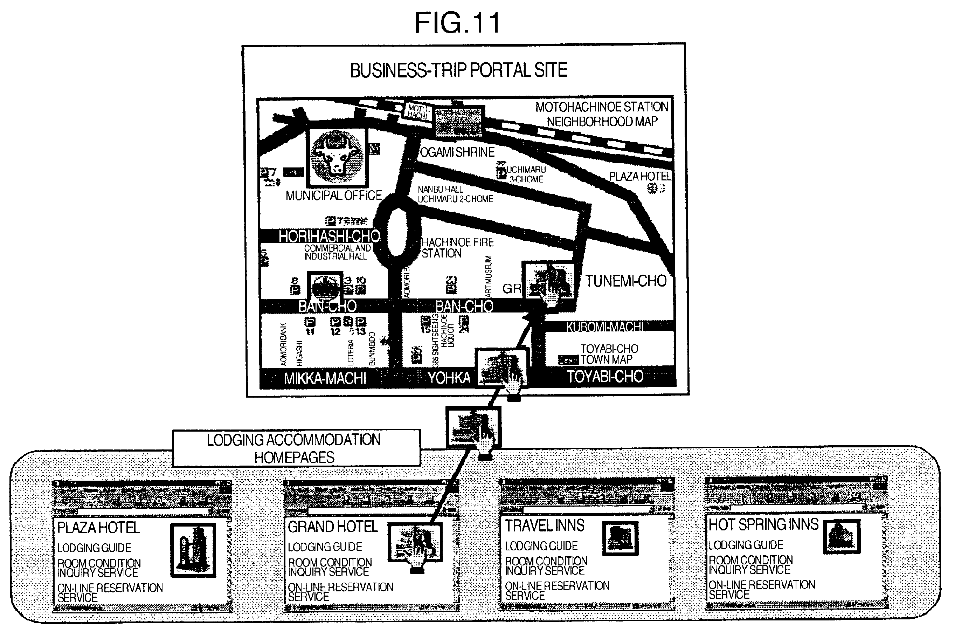

Fig. 11 is a diagram showing an example of making of a business-trip portal site in the present embodiment. As shown in Fig. 11, for making of the personal business-trip portal site, the user first acquires a mount file 1130 including map information of a business trip destination from the mount file providing server 102 and displays it in a window.

Next, the user accesses individual homepages of image/information file providing server 101 that provide image/information files 1100 to 1103 of lodging accommodations to display them in a window, selects and drags an image/information file 1101 of specified lodging accommodation such as cheap lodging accommodation and drops the selected image/information file in the window displaying the mount file 1130.

By mounting image/information files 1110 to 1111 of restaurants and an image/information file 1120 of transport facilities to the mount file 1130 in a similar way, a business-trip portal site can be made which is mounted with various image/information files of sites providing services useful for business trip.

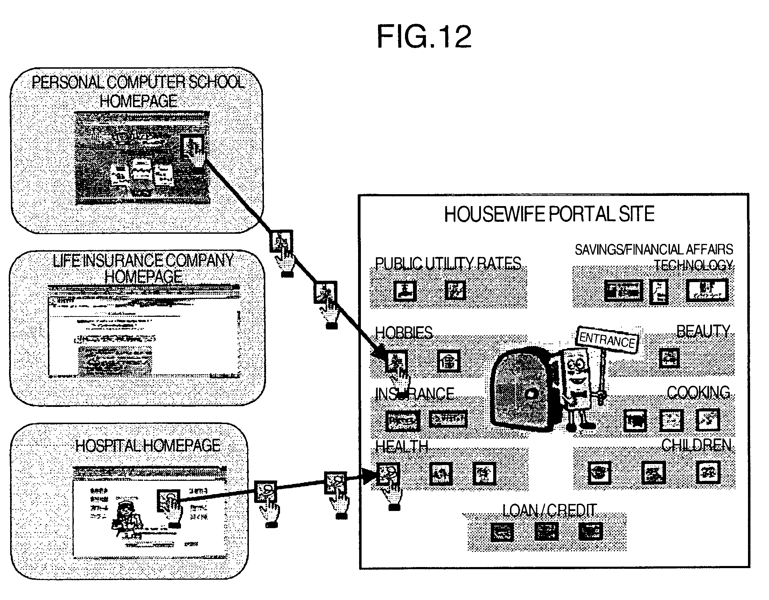

Fig. 12 is a diagram showing an example of making of a housewife portal site in the present embodiment. As shown in Fig. 12, for making of the personal housewife portal site, the user acquires a mount file 1220 displaying, in the form of images, a plurality of items in which housewives are highly interested from the mount file providing server 102 and displays it in a window.

Next, the user accesses individual homepages of image/information file providing server 101 that provide image/information files 1200 of personal computer school to display them in a window, selects and drags an image/information file 1200 of a personal computer school for which the user considers to take lectures and drops the selected image/information file 1200 in the window displaying the mount file 1220.

By mounting an image/information file 1210 of hospitals to the mount file 1220 in a similar way, a housewife portal site can be made to which various image/information files of sites providing services useful for housewives are mounted.

### (7) Utilization of Services

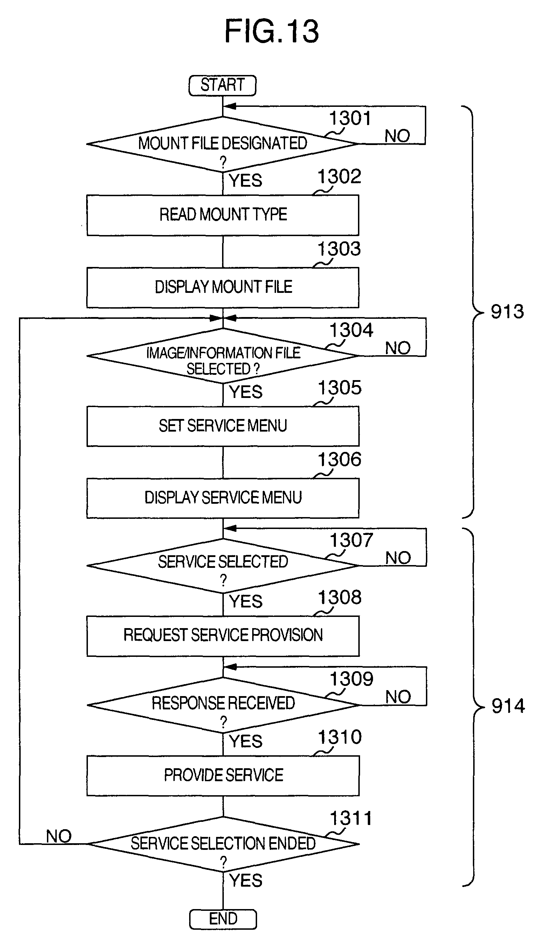

Fig. 13 is a flowchart showing the procedure of process in the user side PC when the user utilizes services.

As shown in Fig. 13, the service providing processor 913 of user side PC 104 examines in step 1301 whether designation of a mount file 707 mounted with image/information files 307 is carried out by the user or its agency. If the mount file 707 is designated, the processor 913 acknowledges the receipt of the contents of the designation and proceeds to step 1302.

In the step 1302, the service providing processor 913 reads the mount type of the designated mount file 707. In the mount file 707, its type is described as a tag and the type can be read by referencing the content of the tag. In step 1303, the designated mount file 707 is indicated to the output unit 905.

Next, the user or its agency selects, from the image/information files 307 mounted to the displayed mount file 707, an image/information file 307 of a service to be provided, moves the pointer of the mouse to a display of the selected image/information file and chooses the image/information file 307 by performing an operation such as right click. The image/information file 307 may be chosen through a different operation.

In step 1304, the service providing processor 913 examines whether the image/information file 307 mounted to the mount file 707 is chosen by the operation such as right click and if the image/information file 307 is chosen, the processor 913 proceeds to step 1305.

In the step 1305, the service providing processor 913 derives watermarked information from the chosen image/information file 307. The mount type 403 of each item in the derived information (Fig. 4) is compared with the type of the mount file 707 read in the step 1302. When the type of the read mount file 707 is included in the mount types 403 of items in the chosen image/information file 307, the corresponding item is set to a service menu. Then, in step 1306, the set service menu is indicated to the output unit 905.

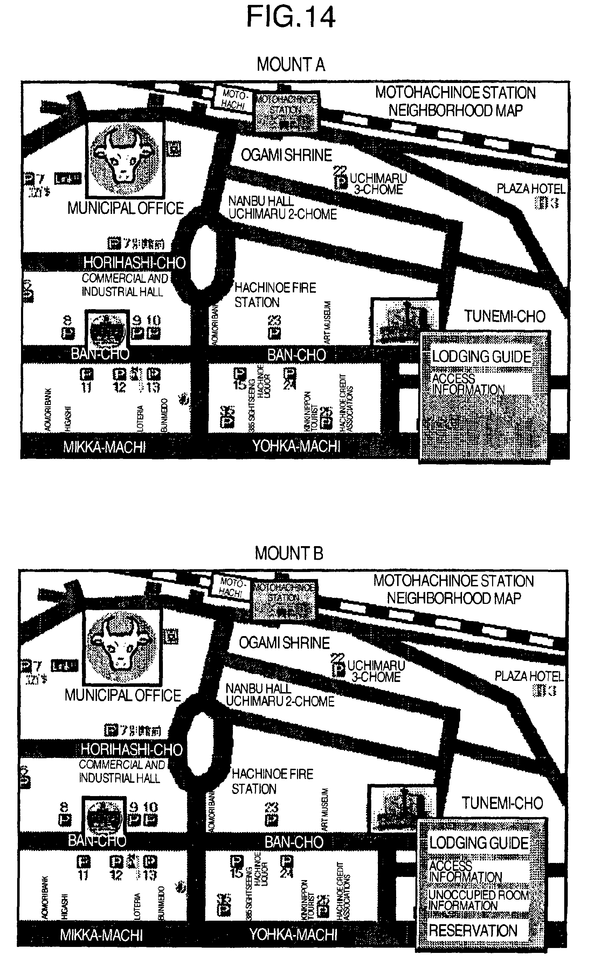

Fig. 14 is a diagram showing an example of the service menu display in the present embodiment. As shown in Fig. 14, in the present embodiment, the content of the service menu can be changed in accordance with the type of the mount file 707. Here, the type of a general-purpose mount file 1400 is "mount A" and the type of a business affairs mount file 1410 is "mount B". On the other hand, it is assumed that the mount types 403 of items "lodging guide" and "access information" in an image/information file 1101 of lodging accommodations are "all" and the mount types 403 of items "unoccupied room information" and "reservation" in the image/information file 1101 are "only mount B".

When the image/information file 1101 of lodging accommodations mounted to the general-purpose mount file 1400 is right clicked, the service providing processor 913 compares the type "mount A" of the general-purpose mount file 1400 with the mount type 403 of each item in the image/information file 1101 of lodging accommodations. Since the mount types 403 of items "lodging guide" and "access information" being "all" include the type "mount A" of the general-purpose mount file 1400, the "lodging guide" and "access information" are displayed as general service menu 1401.

When the image/information file 1101 of lodging accommodations mounted to the business affairs mount file 1410 is right clicked, the service providing processor 913 compares the type "mount B" of the business affairs mount file 1410 with the mount type 403 of each item in the image/information file 1101 of lodging accommodations. Since the mount types 403 of items "lodging guide" and "access information" being "all" include the type "mount B" of the business affairs mount file 1410 and the mount types 403 of items "unoccupied room information" and "reservation" being "only mount B" coincide with the type "mount B" of the business affairs mount file 1410, the "lodging guide", "access information", "unoccupied room information" and "reservation" are displayed as business affairs service menu 1411.

Reverting to Fig. 13, the service request processor 914 of user side PC 104 examines in step 1307 whether a specified service in the displayed service menu is selected and if the specified service is selected, the processor 914 proceeds to step 1308.

In the step 1308, the service request processor 914 requests the service providing server 103 for the service to provide that service by linking to a URL of the contents 402 derived from the image/information file. The service providing processor 810 of service providing server 103 receives a request for provision of the aforementioned service from the user side PC 104 and performs a process for providing that service to the user side PC 104.

In step 1309, the service request processor 914 of user side PC 104 examines whether a response to the service provision request is received from the service providing server 103 and if the response to the service provision request is received, the processor 914 proceeds to step 1310. In the step 1310, the processor 914 displays the HTML file received from the service providing server 103 and performs a process for providing the selected service to the user or its agency.

In step 1311, the processor 914 examines whether the user or its agency designates ending of the process for selecting the image/information file 307 mounted to the mount file 707. If the next image/information file 307 is selected, the processor 014 returns to the step 1304 but if the end of the selecting process is designated, the processor 914 ends the process.

It is to be noted that as part of the service providing processor 913 of user side PC 104, a general-purpose browser for displaying the HTML file may be used. Other parts of the service providing processor 913 and the service request processor 914 may be defined as Plug-in within a mount file and may be started by designating an image/information file that is mounted to the mount.

## Claims

1. A method of aiding portal site making comprising the steps of:
preparing a plurality of mount files (707);
displaying one of said plurality of mount files in accordance with selection by a user;
preparing a plurality of image/information files (307) indicative of various services; and
mounting said image/information files on said displayed mount file in accordance with operation by the user.

2. A portal site making aiding method according to claim 1, wherein each of said image/information files (30) is made by embedding information indicative of the contents of various services in images for identifying the various services through digital watermarking.

3. A portal site making aiding method according to claim 2, wherein the information indicative of the contents of the services of said image/information files includes a service menu and URLs corresponding to individual items of the menu.

4. A portal site making aiding method according to claim 1, wherein said plurality of mount files (707) and said image/information files (307) are provided through a network.

5. A portal site making aiding method according to claim 1, wherein said mount file includes information for identifying the mount type.

6. A portal site making aiding method according to claim 1, wherein the operation by said user is drag and drop of said image/information file.

7. A portal site making aiding method according to claim 6, wherein said mount file is of a HTML format and when said image/information file is dragged and dropped, a statement defining dropped coordinates and an image/information file name is inserted into said mount file.

8. A service providing method for providing services on a network comprising the steps of:
displaying a portal site in which image/information files (30) indicative of various services are mounted on a mount; and
providing service items in accordance with selection of said image/information files by a user.

9. A service providing method according to claim 8, wherein each of said image/information files (307) is made by embedding information indicative of the contents of various services in images for identifying the various services through digital watermarking, and when selecting an image/information file, the embedded information is derived from said selected image/information file.

10. A service providing method according to claim 9, wherein said mount includes information for identifying the mount type;
the information indicative of the contents of said image/information files includes a service menu and the mount type (403) and a URL corresponding to each item of the menu; and
in said service item providing step, the mount type included in said mount is compared with the mount type (403) of each item of the menu included in said image/information file to display a coincident menu item.

11. A service providing method according to claim 10 further comprising the step of linking to a URL of the menu item included in said image/information file in accordance with selection of the menu item by the user.

12. A program for aiding portal site making comprising a code for executing the following steps of:
providing a plurality of mount files (707);
displaying one of said plurality of mount files in accordance with selection by a user;
providing a plurality of image/information files (307) indicative of various services; and
mounting said image/information files on said displayed mount file in accordance with operation by the user.

13. A service providing program for providing services on a network comprising a code for executing the following steps of:
displaying a portal site in which image/information files indicative of various services are mounted on a mount; and
providing a service item in accordance with selection of said image/information file by a user.
